# EUROPÄISCHE PATENTSCHRIFT

(11) **EP 0 555 948 B1**
(45) Veröffentlichungstag und Bekanntmachung des Hinweises auf die Patenterteilung: **10.04.1996**
(21) Anmeldenummer: 93250044.0
(22) Anmeldetag: 05.02.1993
(51) Int. Cl.: F04D 29/16, F04D 25/02, F16H 1/20, F04D 25/16

(54) **Getriebe-Turboverdichter**
Transmission and centrifugal compressor
Transmission et compresseur centrifuge

(30) Priorität: 11.02.1992 DE 4204338
(43) Veröffentlichungstag der Anmeldung: 18.08.1993
(73) Patentinhaber: MANNESMANN Aktiengesellschaft, D-40027 Düsseldorf (DE)
(72) Erfinder:
(74) Vertreter: Presting, Hans-Joachim, Dipl.-Ing.

(56) Entgegenhaltungen:
- CH-A- 96 038
- CH-A- 231 116
- CH-A- 241 266
- DE-A- 4 003 482
- FR-A- 885 488
- US-A- 2 973 894
- US-A- 3 861 820

## Beschreibung

Die Erfindung betrifft einen mehrstufigen Getriebe-Turboverdichter gemäß dem Gattungsbegriff des Hauptanspruches.

Turboverdichter für ein Druckverhältnis von größer 60 müssen mehrstufig, im Regelfall sechs- bis achtstufig ausgelegt werden, um einen entsprechenden Wirkungsgrad zu erreichen. Für das mit dem Turboverdichter gekoppelte Getriebe bedeutet das, daß im Regelfall mit einer mit dem zentralen Antriebszahnrad im Eingriff stehenden Ritzelwelle zwei Laufräder angetrieben werden. Das ist für sechs Stufen unproblematisch, da es bekannt ist drei Ritzelwellen versetzt am Umfang eines zentralen Antriebszahnrades anzuordnen. Die Schwierigkeiten beginnen mit der Unterbringung der siebten bzw. achten Stufe. Die letzten Stufen müssen aus thermodynamischen Gründen mit hohen Drehzahlen, beispielsweise mit mehr als 20 000 in manchen Fällen mit mehr als 30 000 Umdrehungen pro Minute betrieben werden, was bei festgelegter Zähnezahl des Antriebszahnrades eine entsprechende kleine Zähnezahl der die beiden Stufen antreibenden Ritzelwelle bedeutet. Hier gibt es maschinenbautechnische Grenzen, da auf der einen Seite der Modul für das Antriebszahnrad nicht zu klein gewählt werden darf, um bei den ersten Stufen große Kräfte übertragen zu können und auf der anderen Seite der Modul für die hochtourig laufende Ritzelwelle geringer sein muß, um die erforderliche Mindestzähnezahl anordnen zu können.

Zur Lösung dieses Problems ist bereits vorgeschlagen worden (DE 40 03 482) den Turboverdichter mit einem zweistufigen Getriebe, das ein Zwischenzahnrad aufweist, anzutreiben. Das Zwischenzahnrad, das als Doppelzahnrad mit zwei unterschiedlich großen Zahnrädern ausgebildet ist, kämmt zum einen mit dem zentralen Antriebszahnrad und ist zum anderen im Eingriff mit mindestens einer hochtourig laufenden Ritzelwelle. Der Vorteil dieser Lösung besteht darin, daß der Modul der beiden Zahnräder unterschiedlich gewählt werden kann. Die Ritzelwellen, die mit dem zentralen Antriebszahnrad in Eingriff stehen, weisen einen großen Zahnmodul auf, um die großen Kräfte der ersten Stufen übertragen zu können und die Ritzelwellen, die mit dem zweiten Zahnrad des Doppelzahnrades in Eingriff stehen, weisen einen kleineren Zahnmodul auf, da die Kräfte geringer sind bei gleichzeitig hohen Drehzahlen. Nachteilig bei dieser Lösung ist die Asymmetrie der Anordnung, da die Laufräder, die vom zentralen Antriebszahnrad angetrieben werden, in einer anderen Ebene liegen als die vom zweiten Zahnrad des Doppelzahnrades angetriebenen. Der Getriebekasten muß dann asymmetrisch gebaut werden, wobei der überkragende Teil oben liegen würde. Dabei ergeben sich Probleme für die Aufstellung, da ein relativ großes Kippmoment in der Verankerung abgefangen werden muß. Diese Asymmetrie kann man zwar durch einen entsprechend breit ausgelegten Getriebekasten umgehen, handelt sich dabei aber Schwierigkeiten mit den zunehmend größeren Lagerabständen für die mit dem zentralen Antriebszahnrad kämmenden Ritzelwellen ein. Größere Lagerabstände bedeuten elastischere Ritzelwellen, die zu schwer beherrschbaren Schwingungsproblemen führen können.

Aufgabe der Erfindung ist es, einen verbesserten Getriebe-Turboverdichter anzugeben, der auch für ein Druckverhältnis größer 60 und bis zu 80 und mehr einen hohen Wirkungsgrad hat und dessen Getriebe die geschilderten Nachteile der bereits bekannten Lösung nicht aufweist.

Diese Aufgabe wird mit einem gattungsgemäßen zweistufigen Getriebe gelöst, dessen Zwischenzahnrad als Tripelzahnrad ausgebildet ist, wobei mindestens ein mit dem zentralen Antriebszahnrad kämmendes Zahnrad des Tripelzahnrades den größeren Zahnmodul aufweist und mindestens ein Zahnrad des Tripelzahnrades im Durchmesser verschieden ist. Der Vorteil der Anordnung eines Tripelzahnrades als Zwischenzahnrad ist darin zu sehen, daß auf der einen Seite die thermodynamischen Belange, d.h. hohe Drehzahlen für die letzten Verdichterstufen bei akzeptabler Mindestzähnezahl für die Ritzelwelle und auf der anderen Seite die getriebetechnischen Notwendigkeiten, d.h. symmetrischer Getriebekasten, geringe Lagerabstände, gleichmäßige Kräfteverteilung ebenfalls optimal berücksichtigt werden können. Außerdem ergeben sich durch das Tripelzahnrad Möglichkeiten, die Ritzelwellen unterschiedlich zu gestalten und zu lagern, sowie die Drehzahlen für die einzelnen Stufen optimal zu wählen. Eine besonders vorteilhafte Ausgestaltung besteht darin, die Ritzelwelle zu teilen und getrennt zu lagern. Durch diese Teilung ist es möglich für das jeweils einzeln angetriebene Laufrad eine optimale Drehzahl zu wählen. Dazu werden die mit den beiden getrennt gelagerten Ritzelwellen in Eingriff stehenden Zahnräder des Tripelzahnrades im Durchmesser unterschiedlich ausgelegt. Bei entsprechender Anpassung des Durchmessers der Verzahnung der jeweiligen Ritzelwelle ist es möglich, den Achsabstand zum Tripelzahnrad für beide Ritzelwellen gleich zu halten. Eine andere Möglichkeit besteht darin die Durchmesser der beiden Zahnräder gleich zu lassen, aber den Durchmesser der Verzahnung einer Ritzelwelle kleiner zu wählen,um so unterschiedliche Drehzahlen zu erzeugen. Dies führt dann zwangsläufig zu unterschiedlichen Achsabständen zwischen Tripelzahnrad und den beiden getrennt gelagerten Ritzelwellen. Dieses Prinzip der Teilung und getrennten Lagerung der Ritzelwelle ist sowohl bei den im hohen Drehzahlbereich arbeitenden Ritzelwellen als auch bei den im niedrigen Drehzahlbereich und mit dem zentralen Antriebszahnrad kämmenden Ritzelwellen anwendbar.

In der Zeichnung wird anhand einiger Ausführungsbeispiele der erfindungsgemäße Getriebe-Turboverdichter näher erläutert.

Es zeigen:
- Figur 1: einen stark vereinfachten Schnitt entlang der Linie XX in Figur 2 durch einen erfindungsgemäßen Getriebe-Turboverdichter
- Figur 2: eine Seitenansicht in Richtung Y in Figur 1
- Figur 3: vergleichbar wie Fig. 1, jedoch mit einer anderen Ausführungsform der mit dem Tripelzahnrad kämmenden Ritzelwelle
- Figur 4: ähnlich Fig. 1, jedoch mit getrennt gelagerten Ritzelwellen, die mit dem Tripelzahnrad kämmen.
- Figur 5: ähnlich Fig. 1, jedoch eine weitere Ausführungsform des erfindungsgemäßen Getriebe-Turboverdichters
- Figur 6: ähnlich Fig. 5, jedoch mit getrennt gelagerten Ritzelwellen, die mit dem zentralen Antriebszahnrad kämmen.

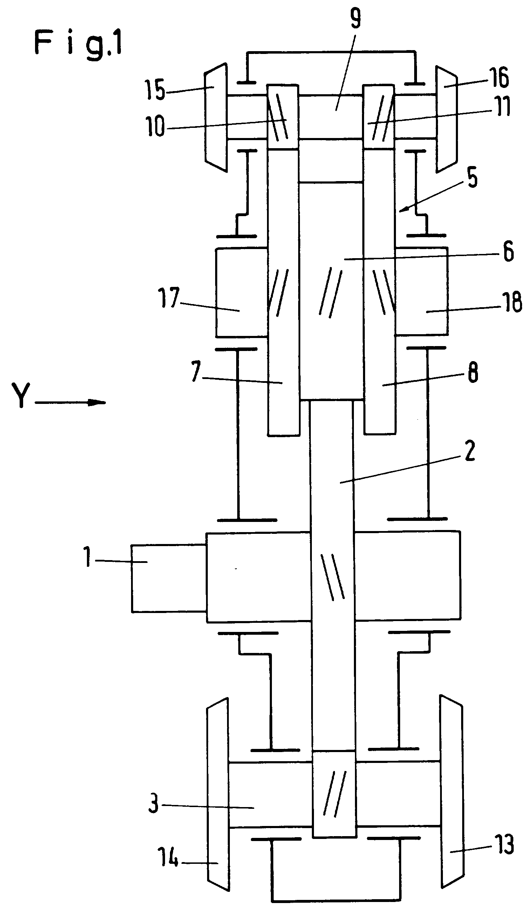

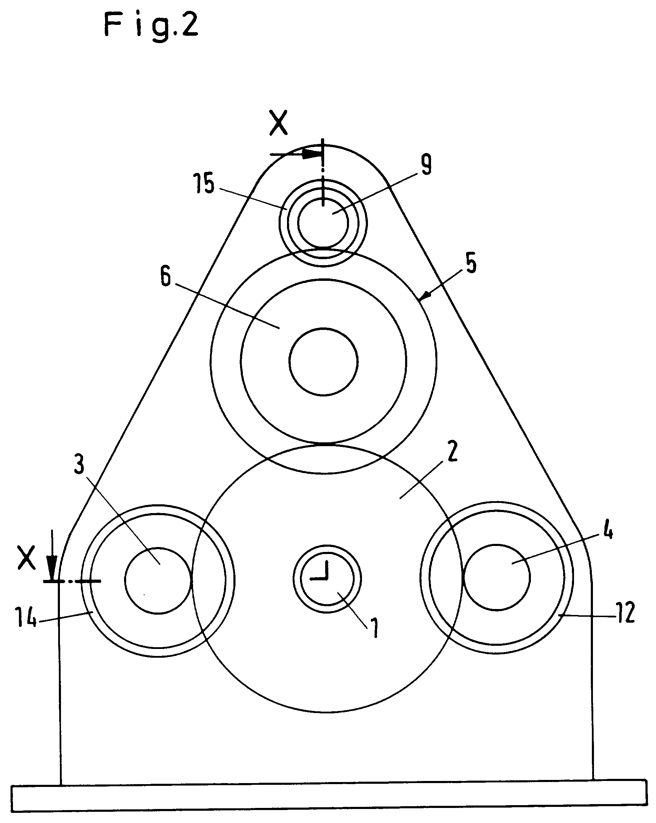

In Figur 1 ist in einem stark vereinfachten Schnitt und in Figur 2 in einer Ansicht eine erste Ausführungsform des erfindungsgemäßen Getriebe-Turboverdichters dargestellt. Es zeigt ein durch eine Antriebswelle 1 angetriebenes zentrales Antriebszahnrad 2, das mit zwei Ritzelwellen 3,4 und dem Tripelzahnrad 5 in Eingriff steht. In diesem Ausführungsbeispiel besteht das Tripelzahnrad 5 aus einem Mittelzahnrad 6 mit einem großen Zahnmodul, das mit dem zentralen Antriebszahnrad 2 kämmt und zwei, einen größeren aber gleichen Durchmesser aufweisende Zahnrädem 7,8 mit einem kleineren Zahnmodul, die symmetrisch rechts und links zum Mittelzahnrad 6 angeordnet sind. Die beiden äußeren Zahnräder 7,8 des Tripelzahnrades 5 kämmen wiederum mit einer Ritzelwelle 9, die zwei abgesetzte Verzahnungen 10,11 aufweist. An den Enden der jeweiligen Ritzelwelle 3,4,9 sind fliegend die Laufräder 12,13,14,15,16 angeordnet. Die Lagerung der Ritzelwellen 3,4,9 und der Wellen 1 bzw. Wellenzapfen 17,18 ist hier nur grob angedeutet. Der Vollständigkeit halber sei an dieser Stelle darauf hingewiesen, daß je nach Auslegung des Turboverdichters das zentrale Antriebszahnrad 2 mit nur einer Ritzelwelle oder zwei 3,4, wie in diesem Beispiel gezeigt, oder drei bis sogar vier Ritzelwellen in Eingriff stehen kann, wobei je Ritzelwelle mindestens ein bzw. zwei Laufräder fliegend angeordnet sind. Diese Aussage gilt auch für das Tripelzahnrad 5, das auch mit mindestens einer Ritzelwelle 9 wie in diesem Beispiel gezeigt, oder mit mehreren Ritzelwellen über den Umfang verteilt angeordnet in Eingriff stehen kann.

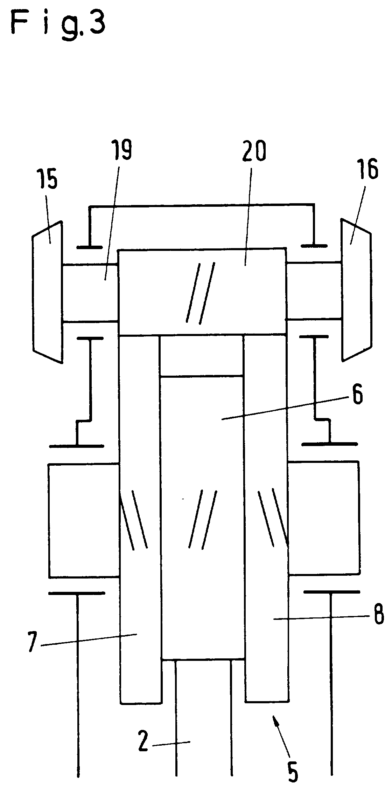

Figur 3 zeigt eine Variante der generellen Ausführungsform in Figur 1. In diesem Beispiel zeigt die mit dem Tripelzahnrad 5 in Eingriff stehende Ritzelwelle 19 eine durchgehende Verzahnung 20. Dies kann erforderlich sein, wenn für sehr hohe Drehzahlen die durchgehende Verzahnung als Versteifungselement für die Ritzelwelle 19 genutzt wird.

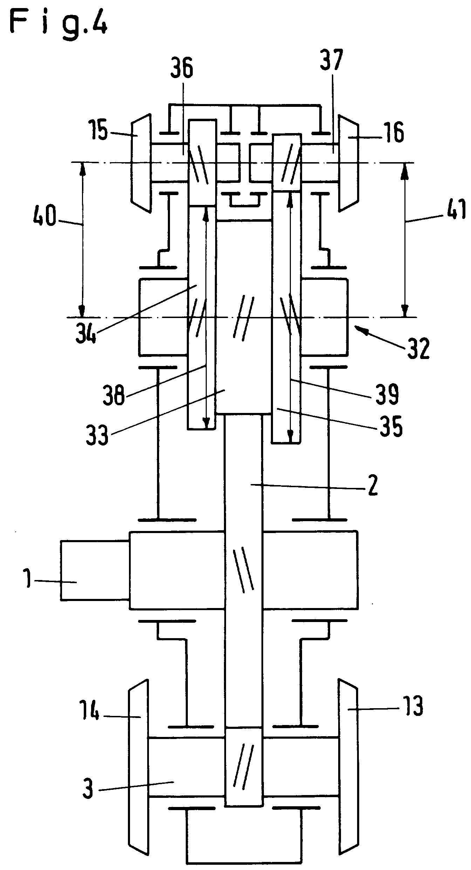

Figur 4 zeigt ein vergleichbares Ausführungsbeispiel wie Fig. 1, jedoch mit dem Unterschied, daß die Ritzelwelle, an der die im hohen Drehzahlbereich arbeitenden Laufräder 15,16 angeordnet sind, in zwei getrennt gelagerte Ritzelwellen 36,37 aufgeteilt ist. In diesem Ausführungsbeispiel ist das rechts vom Mittelzahnrad 33 des Tripelzahnrades 32 angeordnete Zahnrad 35 im Durchmesser 39 größer als das links 34 angeordnete. Der Durchmesser der Verzahnung der getrennt gelagerten und mit dem genannten Zahnrad 35 kämmenden Ritzelwelle 37 wurde entsprechend der Durchmesservergrößerung 39 des rechts angeordneten Zahnrades 35 verkleinert, so daß der Achsabstand 40,41 zwischen den getrennt gelagerten Ritzelwellen 36,37 und dem Tripelzahnrad 32 gleich ist. Auf diese Weise hat man eine weitere Übersetzung in das Getriebe eingebaut und kann so die thermodynamischen Bedingungen im Hinblick auf die Drehzahl der Laufräder weiter optimieren. Dabei muß daran erinnert werden, daß jeder Prozentpunkt Wirkungsgradverbesserung einen entsprechenden Kostenvorteil bedeutet. Die zuvor erläuterte Ausführung kann in der Weise abgewandelt werden, daß man die beiden symmetrisch angeordneten Zahnräder 34,35 des Tripelzahnrades 32 im Durchmesser gleich läßt und eine der beiden Verzahnungen der getrennt gelagerten Ritzelwellen 36,37 im Durchmesser verringert, um so zu der gewünschten Übersetzung zu gelangen. Dabei muß in Kauf genommen werden, daß der Achsabstand 40,41 zwischen den Ritzelwellen 36,37 und dem Tripelzahnrad 32 verschieden ist. Die Idee der geteilten und getrennt gelagerten Ritzelwellen 36,37 eröffnet auch die Möglichkeit die Zahnmodule der beiden äußeren Zahnräder 34,35 des Tripelzahnrades 32 verschieden zu wählen, so daß auch hierdurch günstigere Anpassungen an die optimale Drehzahl möglich sind.

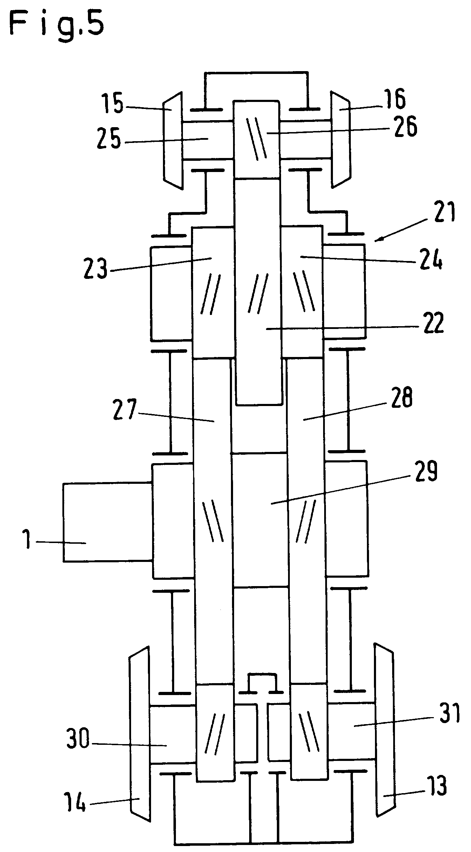

In Figur 5 ist in einem gleichen stark vereinfachten Schnitt wie in Figur 1 eine weitere Ausführungsform des erfindungsgemäßen Getriebe-Turboverdichters dargestellt. Auch diese Ausführungsform weist ein Tripelzahnrad 21 auf, das ebenfalls aus einem Mittelzahnrad 22 und zwei gleich großen symmetrisch dazu angeordneten Zahnrädern 23,24 besteht. Im Unterschied zur Figur 1 kämmt bei diesem Ausführungsbeispiel das einen kleineren Zahnmodul aufweisende Mittelzahnrad 22 mit der hochtourig laufenden Ritzelwelle 25, die eine durchgehende Verzahnung 26 aufweist. Die einen größeren Zahnmodul aufweisenden beiden äußeren Zahnräder 23,24 kämmen mit dem eine abgesetzte Verzahnung 27,28 aufweisenden zentralen Antriebszahnrad 29. Dieses Antriebszahnrad 29 ist wie bei Figur 1 mit einer üblichen Antriebswelle 1 verbunden. Die mit diesem zentralen Antriebszahnrad 29 angetriebenen Laufräder 13,14 sind mit zwei getrennt gelagerten Ritzelwellen 30,31 verbunden. Alternativ können diese Laufräder 13,14 aber auch über eine vergleichbare ausgebildete Ritzelwelle 9,19, wie in Figur 1 bzw. Figur 3 dargestellt, angetrieben werden.

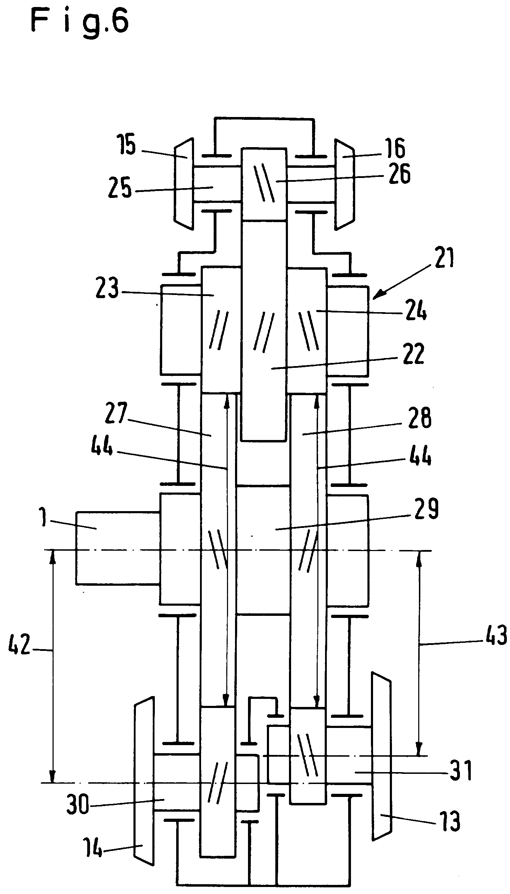

Eine Variante zu Figur 5 ist in Fig. 6 dargestellt. Vergleichbar wie in Fig. 4 bereits erläutert, ist in diesem Beispiel die Ritzelwelle im niederen Drehzahlbereich geteilt 30,31 und getrennt gelagert. Hierbei ergibt sich bei gleichem Durchmesser für die abgesetzten Verzahnungen 27,28 des zentralen Antriebszahnrades 29 ein unterschiedlicher Achsabstand 42,43, wenn man im Unterschied zu Figur 5 den Durchmesser einer Verzahnung einer getrennt gelagerten Ritzelwelle 30,31 unterschiedlich wählt. Der unterschiedliche Achsabstand 42,43 ist zwar konstruktiv aufwendiger, hat aber den Vorteil, daß die beiden Laufräder 13,14 mit einer thermodynamisch optimal gewählten Drehzahl angetrieben werden können. Die Variante der unterschiedlichen Zahnmodule, wie im Beispiel gemäß Figur 4 erläutert, ist hier nicht möglich, da durch das Kämmen des zentralen Antriebszahnrades 29 mit dem Tripelzahnrad 22 der Zahnmodul der abgesetzten Verzahnungen 27,28 des zentralen Antriebszahnrades 29 gleich sein muß.

## Patentansprüche

1. Mehrstufiger Getriebe-Turboverdichter mit einem ein zentrales Antriebszahnrad (2, 29) und ein Zwischenzahnrad aufweisenden zweistufigen Getriebe, bei dem die Laufräder (12-16) der Verdichterstufen auf den Enden von Ritzelwellen angeordnet sind, wobei mindestens eine Ritzelwelle durch das zentrale Antriebszahnrad (2, 29) angetrieben ist und das einen unterschiedlichen Zahnmodul aufweisende Zwischenzahnrad einerseits mit dem zentralen Antriebszahnrad (2, 29) und andererseits mit mindestens einer weiteren Ritzelwelle in Eingriff steht, dadurch gekennzeichnet,
daß das Zwischenzahnrad als Tripelzahnrad 5, 21, 32) ausgebildet ist, wobei mindestens ein mit dem zentralen Antriebszahnrad (2, 29) kämmendes Zahnrad (6, 33); (23,24) 24) des Tripelzahnrades (5, 21, 32) den größeren Zahnmodul aufweist und mindestens ein Zahnrad (6, 22, 33) des Tripelzahnrades (5, 21, 32) im Durchmesser verschieden ist.

2. Mehrstufiger Getriebe-Turboverdichter nach Anspruch 1,
**dadurch gekennzeichnet,**
daß das Tripelzahnrad (5) aus einem in der Mitte angeordneten, einen großen Zahnmodul aufweisendes Zahnrad (6) besteht und aus zwei weiteren, einen gleichen, aber größeren Durchmesser und einen kleineren Zahnmodul aufweisenden Zahnrädern (7,8), die rechts und links symmetrisch zum Mittelzahnrad (6) angeordnet sind, wobei das Mittelzahnrad (6) mit dem zentralen Antriebszahnrad (2) in Eingriff steht.

3. Mehrstufiger Getriebe-Turboverdichter nach Anspruch 1,
**dadurch gekennzeichnet,**
daß das Tripelzahnrad (32) aus einem in der Mitte angeordnetendaß das Tripelzahnrad (32) aus einem in der Mitte angeordneten einen großen Zahnmodul aufweisendes Zahnrad (33) besteht und aus zwei weiteren, einen verschiedenen, aber größeren Durchmesser (38,39) und einen gleichen, aber kleineren Zahnmodul aufweisenden Zahnrädern (34,35), die rechts und links symmetrisch zum Mittelzahnrad (33) angeordnet sind, wobei das Mittelzahnrad (33) mit dem zentralen Antriebszahnrad (2) in Eingriff steht.

4. Mehrstufiger Getriebe-Turboverdichter nach Anspruch 3,
**dadurch gekennzeichnet,**
daß die zwei, einen verschiedenen, aber größeren Durchmesser (38,39) aufweisenden Zahnräder (34,35) mit einem kleineren, aber unterschiedlichen Zahnmodul im Vergleich zum Mittelzahnrad (33) versehen sind.

5. Mehrstufiger Getriebe-Turboverdichter nach Anspruch 2,
**dadurch gekennzeichnet,**
daß die mit dem Tripelzahnrad (5) in Eingriff stehende Ritzelwelle (19) eine durchgehende Verzahnung (20) aufweist.

6. Mehrstufiger Getriebe-Turboverdichter nach Anspruch 2 oder 3,
**dadurch gekennzeichnet,**
daß das Tripelzahnrad (5,32) mit zwei getrennt gelagerten Ritzelwellen (36,37) in Eingriff steht, wobei der Achsabstand des Tripelzahnrades (5,32) zu den Ritzelwellen (36,37) gleich (40,41) oder verschieden ist.

7. Mehrstufiger Getriebe-Turboverdichter nach Anspruch 1,
**dadurch gekennzeichnet,**
daß das Tripelzahnrad (21) aus einem in der Mitte angeordneten einen kleinen Zahnmodul aufweisendes Zahnrad (22) besteht und aus zwei weiteren, einen gleichen, aber kleineren Durchmesser und einen größeren Zahnmodul aufweisenden Zahnrädern (23,24), die rechts und links symmetrisch zum Mittelzahnrad (22) angeordnet sind, wobei die äußeren beiden Zahnräder (23,24) mit dem eine abgesetzte Verzahnung (27,28) aufweisenden zentralen Antriebszahnrad (29) in Eingriff stehen.

8. Mehrstufiger Getriebe-Turboverdichter nach Anspruch 7,
**dadurch gekennzeichnet,**
daß die mit dem zentralen Antriebszahnrad (29) in Eingriff stehende Ritzelwelle eine durchgehende Verzahnung aufweist.

9. Mehrstufiger Getriebe-Turboverdichter nach Anspruch 7,
**dadurch gekennzeichnet,**
daß das zentrale Antriebszahnrad (29) mit zwei getrennt gelagerten Ritzelwellen (30,31) in Eingriff steht.

10. Mehrstufiger Getriebe-Turboverdichter nach den Ansprüchen 7 und 9,
**dadurch gekennzeichnet,**
daß die zwei getrennt gelagerten Ritzelwellen (30,31) bei gleich großem Durchmesser (44) der abgesetzten Verzahnungen (27,28) des zentralen Antriebszahnrades (29) einen gleichen oder unterschiedlichen Achsabstand (42,43) zum zentralen Antriebszahnrad (29) haben.

## Claims

1. Multistage geared turbocompressor with a two-stage gear system comprising a central driving gearwheel (2, 29) and an intermediate gearwheel, wherein the impellers (12-16) of the compressor stages are arranged on the ends of pinion shafts, at least one pinion shaft being driven by the central driving gearwheel (2, 29), and the intermediate gearwheel, which has a different module, being in mesh on one side with the central driving gearwheel (2, 29) and on the other with at least one further pinion shaft, characterised in that the intermediate gearwheel is formed as a triple gearwheel (5, 21, 32), with at least one gearwheel (6, 33); (23, 24), which meshes with the central driving gearwheel (2, 29), of the triple gearwheel (5, 21, 32) having the greater module, and at least one gearwheel (6, 22, 33) of the triple gearwheel (5, 21, 32) having a different diameter.

2. Multistage geared turbocompressor according to claim 1, characterised in that the triple gearwheel (5) consists of a gearwheel (6) which is arranged in the centre and has a large module and of two further gearwheels (7, 8) which have an equal, yet greater diameter and a smaller module and are arranged on the right and the left symmetrically with respect to the central gearwheel (6), the central gearwheel (6) being in mesh with the central driving gearwheel (2).

3. Multistage geared turbocompressor according to claim 1, characterised in that the triple gearwheel (32) consists of a gearwheel (33) which is arranged in the centre and has a large module and of two further gearwheels (34, 35) which have a different, yet greater diameter (38, 39) and an equal, yet smaller module and are arranged on the right and the left symmetrically with respect to the central gearwheel (33), the central gearwheel (33) being in mesh with the central driving gearwheel (2).

4. Multistage geared turbocompressor according to claim 3, characterised in that the two gearwheels (34, 35) having a different, yet greater diameter (38, 39) have a smaller, yet different module when compared with the central gearwheel (33).

5. Multistage geared turbocompressor according to claim 2, characterised in that the pinion shaft (19), which is in mesh with the triple gearwheel (5), has a continuous tooth system (20).

6. Multistage geared turbocompressor according to claim 2 or 3, characterised in that the triple gearwheel (5, 32) is in mesh with two separately mounted pinion shafts (36, 37), the centre distance of the triple gearwheel (5, 32) with respect to the pinion shafts (36, 37) being equal (40, 41) or different.

7. Multistage geared turbocompressor according to claim 1, characterised in that the triple gearwheel (21) consists of a gearwheel (22) which is arranged in the centre and has a small module and of two further gearwheels (23, 24) which have an equal, yet smaller diameter and a greater module and are arranged on the right and the left symmetrically with respect to the central gearwheel (22), the two outer gearwheels (23, 24) being in mesh with the central driving gearwheel (29), which has a staggered tooth system (27, 28).

8. Multistage geared turbocompressor according to claim 7, characterised in that the pinion shaft which is in mesh with the central driving gearwheel (29) has a continuous tooth system.

9. Multistage geared turbocompressor according to claim 7, characterised in that the central driving gearwheel (29) is in mesh with two separately mounted pinion shafts (30, 31).

10. Multistage geared turbocompressor according to claims 7 and 9, characterised in that, with the staggered tooth systems (27, 28) of the central driving gearwheel (29) having equal diameters (44), the two separately mounted pinion shafts (30, 31) have an equal or different centre distance (42, 43) with respect to the central driving gearwheel (29).

## Revendications

1. Turbocompresseur de transmission à plusieurs étages, comportant une transmission à deux étages présentant une roue dentée d'entraînement centrale (2, 29) et une roue dentée intermédiaire, dans lequel les rotors (12 - 16) des étages de compresseur sont agencés aux extrémités d'arbres de pignon, au moins un arbre de pignon étant entraîné par la roue dentée d'entraînement centrale (2, 29) et la roue dentée intermédiaire présentant un module différent étant en engagement, d'une part, avec la roue dentée d'entraînement centrale (2, 29) et, d'autre part, avec au moins un autre arbre de pignon,
caractérisé en ce que la roue dentée intermédiaire est réalisée sous forme de roue dentée triple (5, 21, 32), au moins une roue dentée (6, 33 ; 23, 24), en engrènement avec la roue dentée d'entraînement centrale (2, 29), de la roue dentée triple (5, 21, 32) présentant un plus grand module et au moins une roue dentée (6, 22, 33) de la roue dentée triple (5, 21, 32) présentant un diamètre différent.

2. Turbocompresseur de transmission à plusieurs étages selon la revendication 1,
caractérisé en ce que la roue dentée triple (5) est constituée d'une roue dentée (6), agencée au centre, présentant un grand module et de deux autres roues dentées (7, 8) présentant un plus petit module et un diamètre identique mais plus grand, qui sont agencées à droite et à gauche symétriquement par rapport à la roue dentée centrale (6), la roue dentée centrale (6) étant en engagement avec la roue dentée d'entraînement centrale (2).

3. Turbocompresseur de transmission à plusieurs étages selon la revendication 1,
caractérisé en ce que la roue dentée triple (32) est constituée d'une roue dentée (33), agencée au centre, présentant un grand module et de deux autres roues dentées (34, 35) présentant un diamètre différent mais plus grand (38, 39) et un module identique mais plus petit, qui sont agencées à droite et à gauche symétriquement par rapport à la roue dentée centrale (33), la roue dentée centrale (33) étant en engagement avec la roue dentée d'entraînement centrale (2).

4. Turbocompresseur de transmission à plusieurs étages selon la revendication 3,
caractérisé en ce que les deux roues dentées (34, 35) présentant un diamètre différent mais plus grand (38, 39) possèdent un module plus petit mais différent par rapport à la roue dentée centrale (33).

5. Turbocompresseur de transmission à plusieurs étages selon la revendication 2,
caractérisé en ce que l'arbre de pignon (19) en engagement avec la roue dentée triple (5) présente une denture continue (20).

6. Turbocompresseur de transmission à plusieurs étages selon la revendication 2 ou 3,
caractérisé en ce que la roue dentée triple (5, 32) est en engagement avec deux arbres de pignon (36, 37) montés de façon séparée, les distances axiales de la roue dentée triple (5, 32) aux arbres de pignon (36, 37) étant identiques (40, 41) ou différentes.

7. Turbocompresseur de transmission à plusieurs étages selon la revendication 1,
caractérisé en ce que la roue d'entraînement triple (21) est constituée d'une roue dentée (22) agencée au centre, présentant un petit module et de deux autres roues dentées (23, 24) présentant un diamètre identique mais plus petit et un plus grand module, qui sont agencées à droite et à gauche symétriquement par rapport à la roue dentée centrale (22), les deux roues dentées externes (23, 24) étant en engagement avec la roue dentée d'entraînement centrale (29) présentant une denture décalée (27, 28).

8. Turbocompresseur de transmission à plusieurs étages selon la revendication 7,
caractérisé en ce que l'arbre de pignon en engagement avec la roue dentée d'entraînement centrale (29) présente une denture continue.

9. Turbocompresseur de transmission à plusieurs étages selon la revendication 7,
caractérisé en ce que la roue dentée d'entraînement centrale (29) est en engagement avec deux arbres de pignon (30, 31) montés de façon séparée.

10. Turbocompresseur de transmission à plusieurs étages selon les revendications 7 et 9,
caractérisé en ce que les deux arbres de pignon (30, 31) montés de façon séparée présentent, pour un même diamètre (44) des dentures décalées (27, 28) de la roue dentée d'entraînement centrale (29), des distances axiales identiques ou différentes (42, 43) par rapport à la roue dentée d'entraînement centrale (29).
